(19) **Europäisches Patentamt**
**European Patent Office**
**Office européen des brevets**

(11) **EP 2 322 037 A1**

(12) **EUROPEAN PATENT APPLICATION**
published in accordance with Art. 153(4) EPC

(43) Date of publication:
**18.05.2011 Bulletin 2011/20**

(21) Application number: **09812840.8**

(22) Date of filing: **24.08.2009**

(51) Int Cl.:
*A01N 25/04* (2006.01)    *A01G 13/02* (2006.01)
*A01N 25/30* (2006.01)    *A01N 25/34* (2006.01)
*A01N 43/40* (2006.01)    *A01N 47/40* (2006.01)
*A01N 47/44* (2006.01)    *A01N 51/00* (2006.01)
*A01P 3/00* (2006.01)    *A01P 7/04* (2006.01)

(86) International application number:
**PCT/JP2009/004066**

(87) International publication number:
**WO 2010/029691 (18.03.2010 Gazette 2010/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.09.2008 JP 2008233424**

(71) Applicant: **Nippon Soda Co., Ltd.**
**Tokyo 100-8165 (JP)**

(72) Inventors:
• **NISHIMURA, Kaoru**
**Makinohara-shi**
**Shizuoka 421-0412 (JP)**
• **IWASA, Takao**
**Tokyo 100-8165 (JP)**

(74) Representative: **Wills, Andrew Jonathan et al**
**Mewburn Ellis LLP**
**33 Gutter Lane**
**London**
**EC2V 8AS (GB)**

(54) **PESTICIDE COMPOSITION AND FRUIT BAG**

(57)    The present invention provides an agricultural chemical composition containing an agricultural chemical active ingredient A, a sorbitan fatty acid ester and a wax, and a production process thereof. In addition, the present invention provides an agricultural chemical sheet or a fruit bag in which the agricultural chemical composition is retained, and a production process thereof.

**EP 2 322 037 A1**

**Description**

TECHNICAL FIELD

The present invention relates to an agricultural chemical composition and a fruit bag, and more particularly, to an agricultural chemical composition able to be uniformly coated or impregnated on a sheet base material or bag base material and the I like that also prevents deterioration of the base material, and to an agricultural chemical sheet or fruit bag having good handling ease in which the agricultural chemical composition is retained in a sheet base material or bag base material.

The present invention claims priority on Japanese Patent Application No. 2008-233424 filed in Japan on September 11, 2008, the content of which is incorporated herein by reference.

BACKGROUND ART

Agricultural chemical sheets or fruit bags are known in which an agricultural chemical active ingredient is retained in a sheet base material or bag base material. These are able to control insects harmful to fruit and the like by being placed over, wrapped around or laid over fruit or other plant bodies. A long-known example of such a fruit bag is that containing diazinon, and is considered to be effective against mealybugs (Non-Patent Document 1). In addition, fruit bags are also known that are treated with pyrethroid compounds and organic phosphorous compounds that are highly effective against powderpost beetles and scale insects (Patent Document 1).

In addition, Patent Document 2 discloses a fruit bag in which the surface of the bag base material is coated with a bird repellent such as capsaicin, and the surface coated with the repellent is covered with paraffin. Patent Document 3 discloses a termite controlling agent in which a terminal controlling active ingredient such as acetamiprid is retained in a laminate composed of paper. However, the paper base material became brittle when an agricultural chemical active ingredient such as acetamiprid was dissolved in a solvent and impregnated into a paper base material.

Moreover, Patent Documents 4 and 5 propose a paste-like agricultural chemical preparation containing an agricultural chemical active ingredient such as dinotefuran, thiamethoxam, clothianidin, imidacloprid, triadimefon or mesulfenfos, and an adjuvant that is in the form of a solid, liquid or pate at normal temperatures. Disclosed examples of the adjuvant include sorbitan monolaurate, polyoxyethylene sorbitan monolaurate, polyoxyethylene lanolin, polyoxyethylene beeswax and polyethylene glycol. This paste-like agricultural chemical preparation is indicated as being applied by coating onto the surface or an opening in the surface of a fruit or other plant body, by filling into an opening in the surface of a fruit body formed by drilling with a drill and the like, or by coating onto a band and the like in advance and wrapping the band around a plant body. However, since a band coated with this paste-like agricultural chemical preparation was sticky, it had poor handling ease.

[Prior Art Documents]

[Patent Documents]

[Patent Document 1] Japanese Unexamined Patent Application, First Publication No. 2008-5828
[Patent Document 2] Japanese Unexamined Patent Application, First Publication No. 2006-67846
[Patent Document 3] Japanese Unexamined Patent Application, First Publication No. 2002-53411
[Patent Document 4] Japanese Unexamined Patent Application, First Publication No. H7-291802
[Patent Document 5] Japanese Unexamined Patent Application, First Publication No. 2007-246496

[Non-Patent Documents]

[Non-Patent Document 1] Shimane Prefecture Agricultural Testing Center Research Report No. 7 (March 1966), pp. 87-106

SUMMARY OF THE INVENTION

[Problems to be Solved by the Invention]

In the case an agricultural chemical active ingredient is a liquid compound or highly liposoluble compound, although the compound was able to be easily retained in a bag base material composed of paper and the like, in the case of using an agricultural chemical active ingredient that demonstrates comparatively high water solubility such as neonicotinoid-based compounds, it is difficult to form a uniform coated layer on the surface of the bag base material. In addition, although the details of the cause are unclear, when an agricultural chemical active ingredient that demonstrates water solubility is contained in a paper base material, the paper base material deteriorates over time, and the base material ends up becoming colored or brittle, thereby preventing it from being satisfactory in terms of practical use.

An object of the present invention is to provide an agricultural chemical composition able to be uniformly coated or impregnated on a sheet base material or bag base material and the like that also prevents deterioration of the base material, and an agricultural chemical sheet or fruit bag in which the agricultural chemical composition is retained in a sheet base material or bag base material.

As a result of conducting extensive studies to achieve the above object, the inventors of the present invention found that by melting an agricultural chemical composition containing an agricultural chemical active ingredient A having a saturated solubility in water at 25°C of 500 ppm or more, a sorbitan fatty acid ester and a wax by heating, and coating or impregnating the melt in a sheet base material or bag base material composed of paper and the like, an agricultural chemical sheet or fruit bag is obtained that enables the melt to be uniformly retained in the sheet base material or fruit base material, can be used for a long period of time without causing deterioration of the base material, and has good handling ease. In addition, the inventors of the present invention found that an agricultural chemical sheet or fruit bag can be obtained even if an agricultural chemical active ingredient other than the agricultural chemical active ingredient A is further contained therein. The present invention was completed by conducting further studies on the basis of these findings.

Namely, the present invention is an agricultural chemical composition comprising an agricultural chemical active ingredient, a sorbitan fatty acid ester, and a wax.

Preferably, the present invention is an agricultural chemical composition comprising an agricultural chemical active ingredient A having a saturated solubility in water at 25°C of 500 ppm or more, a sorbitan fatty acid ester, and a wax.

The present invention is a production process of the agricultural chemical composition comprising mixing a heat-melted mixture of an agricultural chemical active ingredient and a sorbitan fatty acid, with a heat-melted wax.

In addition, the present invention is an agricultural chemical sheet or fruit bag in which the agricultural chemical composition is retained in a sheet base material or a bag base material.

Moreover, the present invention is a production process of an agricultural chemical sheet or a fruit bag comprising melting the agricultural chemical composition by heating, and coating or impregnating the melt in a sheet base material or a bag base material.

[Effects of the Invention]

The agricultural chemical composition of the present invention can be uniformly coated or impregnated into a sheet base material or bag base material and the like and prevents deterioration of the base material. An agricultural chemical sheet or fruit bag having good handling ease in which the agricultural chemical composition is uniformly retained in a sheet base material or bag base material is obtained by melting the agricultural chemical composition by heating and coating or impregnating the melt into a sheet base material or bag base material. The agricultural chemical sheet and fruit bag of the present invention is able to demonstrate superior disease control and insect control effects for a long period of time.

BEST MODE FOR CARRYING OUT THE INVENTION

The agricultural chemical composition of the present invention contains an agricultural chemical active ingredient, a sorbitan fatty acid ester and a wax. Preferably, the agricultural chemical composition of the present invention contains an agricultural chemical active ingredient A having a saturated solubility in water at 25°C of 500 ppm or more, a sorbitan fatty acid ester, and a wax.

(Agricultural Chemical Active Ingredient)

There are no particular limitations on the agricultural chemical active ingredient used in the present invention provided it is a compound commonly used as an agricultural chemical, such as a bactericide, insecticide, miticide, plant growth regulator, herbicide, rodenticide, antibacterial agent, antifungal agent or anti-algae agent. These compounds can be used alone or two or more types can be mixed.

Preferably, the agricultural chemical active ingredient is an agricultural chemical active ingredient having a saturated solubility in water at 25°C of 500 ppm or more (hereinafter to be referred to as agricultural chemical active ingredient A). A compound commonly used as an agricultural chemical, such as a bactericide, insecticide, miticide, plant growth regulator, herbicide, rodenticide, antibacterial agent, antifungal agent or anti-algae agent, can be used for the agricultural chemical active ingredient A. These compounds can be used alone or two or more types can be mixed.

Examples of the agricultural chemical active ingredient A include neonicotinoid-based compounds such as (E)-N-(6-chloro-3-pyridylmethyl)-N-ethyl-N'-methyl-2- nitrovinylidenediamine (generic name: nidenpyram, water solubility: approx. 2000 ppm), (E)-N1-[(6-chloro-3-pyridyl)methyl]-N2-cyano-N1-methylacetamidine (generic name: acetamiprid, water solubility: 4200 ppm), 1-(6-chloro-3-pyridylmethyl)-N-nitroimidazolidin-2-ylideneamine (generic name: imidacloprid, water solubility: 510 ppm (20°C)), 3-(2-chloro-1,3-thiazol-5-methyl-1,3,5-oxadiazinan-4- ylidene (generic name: thiamethoxam, water solubility: 4100 ppm), (E)-1-(2-chloro-1,3-thiazol-5-ylmethyl-3-methyl-2- nitroguanidine (generic name: clothianidin, water solubility: 0.327 g/L (20°C)) or (RS)-1-methyl-2-nitro-3-(tetrahydro-3- furylmethyl)guanidine (generic name: dinotefuran, water solubility: 54.3 g/L (20°C));

phosphorous-based compounds such as O,S-dimethyl-N-acetylphosphoroamidothioate (generic name: acephate, water solubility: approx. 650000 ppm) or 2,2-dichlorovinyldimethyl phosphate (generic name: DDVP, water solubility: approx. 1000 ppm (room temperature)); carbamate-based compounds such as 2,2-dimethyl-1,3-benzodioxol-4-yl-methyl carbamate (generic name: bendiocarb, water solubility: 26000 ppm), S,S'-2- dimethylaminotrimethylene-bis (thiocarbamate) (generic name: cartap, water solubility: 200000 ppm) or 2-ethylthiomethylphenylmethyl carbamate (generic name: ethiofencarb, water solubility: 1800 ppm (20°C)); and other insecticidal compounds such as S-methyl-N,N-dimethyl-N- methylcarbamoyloxy-1-thiooxamimidate (generic name: oxamyl, water solubility: 280000 ppm), S-methyl-N-(methylcarbamoyloxy)thioacetoimidate (generic name: methomyl, water solubility: 58000 ppm), or 1,3-dichloropropene (generic name: D-D, water solubility: 2000 ppm). Among these, neonicotinoid-based compounds are preferable, and at least one type of compound selected from the group consisting of nidenpyram, imidacloprid, acetamiprid, thiamethoxam, clothianidin and dinotefuran is more preferable, with acetamiprid being particularly preferable.

The agricultural chemical active ingredient A can normally be contained at 0.01 to 10% by weight and preferably 0.1 to 5% by weight based on the total weight of the agricultural chemical composition.

The agricultural chemical composition of the present invention may further contain an agricultural chemical active ingredient composed of an organic salt (hereinafter to be referred to as agricultural chemical active ingredient B). A compound typically used as an agricultural chemical, such as a bactericide, insecticide, miticide, plant growth regulator, herbicide, rodenticide, antibacterial agent, antifungal agent or anti-algae agent can be used for the agricultural chemical active ingredient B. These compounds can be used alone or two or more types can be mixed. The containing of the agricultural chemical active ingredient B allows a uniform coated film to be formed more easily.

Examples of the agricultural chemical active ingredient B include insecticidal compounds such as 1,1'- iminodi (octamethylene)diguanidium triacetate (generic name: iminoctadine triacetate) or 1,1'-iminodi(octamethylene) diguanidium tris(alkylbenzenesulfonate) (generic name: iminoctadine albesilate). Among these, iminoctadine albesilate is preferable.

The agricultural chemical active ingredient B can be contained at preferably 0.01 to 10% by weight and more preferably 0.1 to 5% by weight based on the total weight of the agricultural chemical composition.

In addition, an agricultural chemical active ingredient other than the agricultural chemical active ingredient A and the agricultural chemical active ingredient B can be used as desired (hereinafter to be referred to as agricultural chemical active ingredient C). The agricultural chemical active ingredient C preferably has high compatibility with wax. Examples thereof include the agricultural chemical active ingredients described in Japanese Unexamined Patent Application, First Publication No. 2008-5828. More specifically, these include pyrethroid compounds such as pyrethrin I, pyrethrin II, sinerin I, sinerin II, jasmolin I, jasmolin II, allethrin I, allethrin II, D-tetramethrin, resmethrin, furamethrin, ethofenprox (Vectron), cyfluthrin, tefluthrin, bifenthrin, resmethrin, cypermethrin or fluvalinate; and, organic phosphorous compounds such as diazinon, prothiofos (Tokuthion), dichlorvos (DDVP), temephos (Abate), pyridaphenthion (Ofunack), trichlorphon (Dipterex), fenitrothion (Sumithion), fenthion (Baytex), propetamphos (Safrotin), chlorpyrifos-methyl (Zartel), malathion, supracide, ortran or karphos.

The agricultural chemical active ingredient C can be contained at preferably 0.01 to 10% by weight and more preferably at 0.1 to 5% by weight based on the total weight of the agricultural chemical composition.

(Sorbitan Fatty Acid Ester)

Examples of sorbitan fatty acid ester used in the present invention include sorbitan monolaurate (Emasol L-10V (trade name, Kao Chemicals Corp.)), sorbitan monopalmitate (Emasol P-10V (trade name, Kao Chemicals Corp.)), sorbitan monostearate (Ionet S-60V (trade name, Sanyo Chemical Industries, Ltd.)), sorbitan monooleate (Ionet S-80 (trade name, Sanyo Chemical Industries, Ltd.)), sorbitan distearate (Rheodol SP-S20 (trade name, Kao Chemicals Corp.)), sorbitan sesquioleate (Rheodol AO-15V (trade name, Kao Chemicals Corp.)), and sorbitan trioleate (Ionet S-85 (trade name, Sanyo Chemical Industries, Ltd.)). In the present invention, these sorbitan fatty acid esters can be used alone or two or more types can be used in combination.

The sorbitan fatty acid ester can be normally contained at 2 to 40% by weight and preferably at 10 to 25% by weight based on the total weight of the agricultural chemical composition.

(Wax)

Examples of wax used in the present invention include vegetable waxes such as candelilla wax, Japan wax or rice wax; animal waxes such as beeswax, lanolin, spermaceti or beef tallow; and petroleum-based waxes such as microcrystalline wax, paraffin wax, petrolactam, carnauba wax, oxidized wax, ester wax, urethane wax, polyolefin or oxidized polyethylene. These waxes can be used alone or two or more types can be used in combination. Among these waxes, petroleum wax that is a solid at normal temperatures is preferable, and microcrystalline wax or paraffin wax is more preferable. In terms of the molecular structure thereof, the wax is preferably of the branched type (isoparaffin), linear type (normal paraffin) or a mixture thereof. Moreover, the melting point is preferably 50 to 95°C. Furthermore, paraffin wax is a hydrocarbon having about 20 to 40 carbon atoms and a molecular weight of about 300 to 550. Microcrystalline wax is a hydrocarbon having about 30 to 60 carbon atoms and a molecular weight of about 500 to 800.

The wax can normally be contained as an essential ingredient at 97.99% by weight or less and preferably 89.9% by weight or less based on the total weight of the agricultural chemical composition. Furthermore, the content of the wax in the agricultural chemical composition is preferably at least 30% by weight.

(Other Components)

A solvent, antiseptic, pigment, dye, plasticizer, surfactant, dispersant, antioxidant or ultraviolet absorber and the like may also be contained in the agricultural chemical composition of the present invention as necessary.
Examples of solvents include methanol, ethanol and propanol.
Examples of antiseptics include 1,2-benzisothiazolin-3- one (BIT), 2-methyl-4-isothiazolin-3-one (MIT) and 5-chloro-2-methyl-4-isothiazolin-3-one (CI-MIT).
Examples of pigments or dyes include inorganic pigments such as titanium dioxide, calcium carbonate, alumina, clay, talc, kaolin, ochre, zinc oxide, zinc chromate, lead chromate, powdered zinc metal, powdered aluminum, ultramarine, Prussian blue, red iron oxide, aluminum hydroxide, zirconia, satin white, carbon black, graphite or barium sulfate, and organic dyes and pigments such as azo dyes, azo disperse dyes, phthalocyanine dyes or anthraquinone disperse dyes.

The agricultural chemical composition of the present invention can be produced using a known method. For example, the agricultural chemical composition of the present invention can be produced by placing the agricultural chemical active ingredient, sorbitan fatty acid ester and wax in a device having a heating device and a stirring device, and then stirring for 10 to 120 minutes while heating to a molten state. Furthermore, in the present invention, the agricultural chemical composition is preferably obtained by mixing a mixture, which is obtained by heating and melting the agricultural chemical active ingredient and sorbitan fatty acid ester, with a molten wax. Various types of heaters can be used for the heating device. A known device such as a magnetic stirrer or a stirring blade stirrer (such as a Three-One Motor (trade name, Shinto Scientific Co., Ltd.) can be used for the stirring device.

There are no particular limitations on the application method of the agricultural chemical composition of the present invention, and examples thereof include coating onto the surface of a cut opening in the surface of a plant body such as a fruit, filling into an opening in the surface of a fruit body formed by drilling with a drill and the like, and coating or impregnating into a base material and then wrapping around a plant body. Since the agricultural chemical composition of the present invention is normally a solid at normal temperatures, it is heated and melted to enable it to be coated or filled into a plant body. The molten agricultural chemical composition is preferably coated or impregnated into a plant body or base material (such as paper, vinyl sheet or fabric) by various methods such as brush coating, roller coating or spray coating.

(Agricultural Chemical Sheet and Fruit Bag)

The agricultural chemical sheet and fruit bag of the present invention consists of retaining the aforementioned agricultural chemical composition in a sheet base material or bag base material. A known material used in the prior art can be used for the base material used for the agricultural chemical sheet or fruit bag, examples of which include a base material composed of paper, such as white simili paper, brown simili paper, red simili paper, ribbed kraft paper, non-ribbed kraft paper or newspaper base paper, vinyl sheet and fabric.
A preferable method for retaining the agricultural chemical composition in the base material consists of melting the agricultural chemical composition by heating, and coating or impregnating the molten agricultural chemical composition into the sheet base material or bag base material. Coating or impregnating the molten agricultural chemical composition melted in this manner makes it possible to uniformly retain the agricultural chemical composition in the base material. Moreover, although the cause thereof is unclear, when the agricultural chemical composition of the present invention is melted and then coated or impregnated, deterioration of the base material can be inhibited and coloring of the base material or embrittlement of the base material over time can be prevented.

[Examples]

Although the following provides a detailed explanation of the present invention by indicating examples and comparative examples thereof, the present invention is not limited to these examples.

Example 1

0.25 parts by weight of acetamiprid bulk drug (generic name, Nippon Soda Co., Ltd.) and 5.0 parts by weight of sorbitan monostearate (Ionet S-60V (trade name, Sanyo Chemical Industries, Ltd.)) were melted by heating at 110°C followed by stirring to uniformity. 19.75 parts by weight of paraffin wax (Paraffin Wax-140 (trade name, Nippon Seiro Co., Ltd.)) pre-melted at 110°C were then added to this molten mixture followed by stirring to uniformity to prepare an agricultural chemical composition containing 1% acetamiprid bulk drug. This agricultural chemical composition was a solid at normal temperatures. The resulting agricultural chemical composition was melted at 110°C and coated onto a general-purpose A4 paper using a commercially available brush to obtain an agricultural chemical sheet. The agricultural chemical composition was uniformly coated on the surface of the paper and was not sticky.

Example 2

0.25 parts by weight of acetamiprid bulk drug (generic name, Nippon Soda Co., Ltd.), 0.43 parts by weight of iminoctadine albesilate bulk drug (containing 28% water-methanol, generic name, Nippon Soda Co., Ltd.) and 5.0 parts by weight of sorbitan monostearate (Ionet S-60V (trade name, Sanyo Chemical Industries, Ltd.)) were melted by heating at 110°C followed by stirring to uniformity. 19.32 parts by weight of paraffin wax (Paraffin Wax-140 (trade name, Nippon Seiro Co., Ltd.)) pre-melted at 110°C were then added to this molten mixture followed by stirring to uniformity to prepare an agricultural chemical composition containing 1% acetamiprid bulk drug and 1% iminoctadine albesilate bulk drug. This agricultural chemical composition was a solid at normal temperatures. The resulting agricultural chemical composition was melted at 110°C and coated onto a general-purpose A4 paper using a commercially available brush to obtain an agricultural chemical sheet. The agricultural chemical composition was uniformly coated on the surface of the paper and was not sticky.

Comparative Example 1

An agricultural chemical composition was prepared in the same manner as Example 1 with the exception of not containing sorbitan monostearate. The composition did not become compatible even when heated and the acetamiprid remained separated. The resulting composition was then melted at 110°C and then coated onto general-purpose A4 paper using a commercially available brush to obtain an agricultural chemical sheet. However, the composition was coated in spots on the paper and a desired agricultural chemical sheet was unable to be obtained.

Comparative Example 2

0.25 parts by weight of acetamiprid bulk drug (generic name, Nippon Soda Co., Ltd.) were melted by heating at 110°C followed by stirring to uniformity. 24.75 parts by weight of sorbitan monolaurate (Newcol 20 (trade name, Nippon Nyukazai Co., Ltd.) pre-melted at 110°C were then added to this melt followed by stirring to uniformity to prepare a composition containing 1% acetamiprid bulk drug. The composition was a paste at normal temperatures. The resulting composition was melted at 110°C and then coated onto general-purpose A4 paper using a commercially available brush. The composition was sticky on the coated surface and resulting sheet had poor handling ease.

Comparative Example 3

A composition containing 1% acetamiprid bulk drug was prepared using the same method as Comparative Example 2 with the exception of replacing the sorbitan monolaurate of Comparative Example 2 with sorbitan monostearate (Ionet S-60V (trade name, Sanyo Chemical Industries, Ltd.). The resulting composition was melted at 110°C and then coated onto general-purpose A4 paper using a commercially available brush. The viscosity of the melt was high, and resistance during coating was high. The composition was sticky on the coated surface, was deeply colored, and the resulting sheet had poor handling ease.

Example 3 (Fruit Bag 1)

The agricultural chemical sheet obtained in Example 1 was cut to a desired size, formed into a bag of the size of a large bag (10 x 20 cm) and used as an inner pouch of a fruit bag, while a bag composed of brown simili paper was used for the outer pouch to obtain a double-layered type of Fruit Bag 1. The resulting fruit bag contained 4 mg of acetamiprid per sheet.

Example 4 (Fruit Bag 2)

Opposite from the Fruit Bag 1, the agricultural chemical sheet obtained in Example 1 was formed into a bag and used for the outer pouch, while a bag composed of brown simili paper was used for the inner pouch to obtain a double-layered type of Fruit Bag 2. This fruit bag contained 4 mg of acetamiprid per sheet.

Example 5 (Fruit Bag 3)

The agricultural chemical sheet obtained in Example 2 was cut to a desired size, formed into a bag of the size of a large bag (10 x 20 cm) and used as an inner pouch of a fruit bag, while a bag composed of brown simili paper was used for the outer pouch to obtain a double-layered type of Fruit Bag 3.

Comparative Example 3 (Fruit Bag 4: Untreated Group)

Paper coated with wax only was formed into a bag and used as an inner pouch, while a bag composed of brown simili paper was used for the outer pouch to obtain a double-layered type of Fruit Bag 4.

Comparative Example 4 (Fruit Bag 5)

The agricultural chemical sheet obtained in Comparative Example 2 was cut to a desired size, formed into a bag of the size of a large bag (10 x 20 cm) and used as an inner pouch of a fruit bag, while a bag composed of brown simili paper was used for the outer pouch to obtain a double-layered type of fruit bag. The inner pouch was sticky and it was difficult to form a bag.

Comparative Example 5 (Fruit Bag 6)

The agricultural chemical sheet obtained in Comparative Example 3 was cut to a desired size, formed into a bag of the size of a large bag (10 x 20 cm) and used as an inner pouch of a fruit bag, while a bag composed of brown simili paper was used for the outer pouch to obtain a double-layered type of fruit bag. The inner pouch was sticky and it was difficult to form a bag.

(Efficacy Test)

A piece of vinyl sheet on which was placed ten Oriental fruit moth eggs was placed on a Silk Mate (Nosan Corp.) sliced to a thickness of 1 cm at an orientation such that the eggs did not contact the Silk Mate to inoculate the Silk Mate with the eggs. The egg-inoculated Silk Mate was placed in each of the Fruit Bags 1 to 4 followed by closing the bags. The bags were then placed in tall Petri dishes. The Petri dishes were placed in a constant temperature chamber at 25°C set to be illuminated for 16 hours per day. The Petri dishes were removed after 12 days had elapsed from the time of egg inoculation and the numbers of live larva were counted. This test was repeated twice for each group (A and B). The control rates were calculated using the equation below. The results are shown in Table 1.

$$\text{Control rate (\%)} = 100 \times (1 - \text{treated group survival rate / untreated group survival rate})$$

[Table 1]

Table 1

| Group | Repetition | No. of eggs used | No. of live larva | Larva survival rate (%) | Control rate (%) | Bag status |
|---|---|---|---|---|---|---|
| Fruit Bag 1 (treated group) | A | 10 | 0 | 0 | 100 | Uniformly coated film, no sticking |
| | B | 8 | 0 | 0 | 100 | |
| | Mean | | | 0 | 100 | |
| Fruit Bag 2 (treated group) | A | 8 | 0 | 0 | 100 | Uniformly coated film, no sticking |
| | B | 14 | 0 | 0 | 100 | |
| | Mean | | | 0 | 100 | |
| Fruit Bag 3 (treated group) | A | 12 | 0 | 0 | 100 | Uniformly coated film, no sticking |
| | B | 11 | 0 | 0 | 100 | |
| | Mean | | | 0 | 100 | |
| Fruit Bag 4 (untreated group) | A | 11 | 7 | 63.6 | - | Uniformly coated film, no sticking |
| | B | 9 | 6 | 66.7 | - | |
| | Mean | | | 65 | - | |

On the basis of the above results, an agricultural chemical composition containing an agricultural chemical active ingredient A having a saturated solubility in water at 25°C of 500 ppm or more, a sorbitan fatty acid ester and a wax (Examples 1 and 2) is able to be uniformly coated or impregnated into a base material, and an agricultural chemical sheet in which the agricultural chemical composition is retained does not have a sticky surface, can be easily formed into a bag, and has superior control effects. On the other hand, a composition not containing sorbitan fatty acid ester (Comparative Example 1) is unable to be uniformly coated onto a base material. In addition, although a composition not containing wax (Comparative Examples 2 and 3) is able to be coated or impregnated into a base material, the surface thereof is sticky and is difficult to be formed into a bag.

INDUSTRIAL APPLICABILITY

The agricultural chemical composition of the present invention is able to be uniformly coated or impregnated into a sheet base material or bag base material, and does not cause deterioration of the base material. An agricultural chemical sheet or fruit bag obtained by coating or impregnating the agricultural chemical composition into a sheet base material or bag base material is able to demonstrate superior disease control and insect control effects for a long period of time, thereby making it industrially useful.

**Claims**

1. An agricultural chemical composition comprising an agricultural chemical active ingredient, a sorbitan fatty acid ester and a wax.

2. The agricultural chemical composition according to claim 1, wherein the agricultural chemical active ingredient is an agricultural chemical active ingredient A having a saturated solubility in water at 25°C of 500 ppm or more.

3. The agricultural chemical composition according to claim 2, wherein the agricultural chemical active ingredient A is a neonicotinoid-based compound.

4. The agricultural chemical composition according to claim 2, wherein the agricultural chemical active ingredient A is at least one type selected from the group consisting of nidenpyram, imidacloprid, acetamiprid, thiamethoxam, clothianidin and dinotefuran.

5. The agricultural chemical composition according to claim 2, wherein the agricultural chemical active ingredient A is acetamiprid.

6. The agricultural chemical composition according to any of claims 2 to 5, further comprising an agricultural chemical active ingredient B composed of an organic salt.

7. The agricultural chemical composition according to claim 6, wherein the agricultural chemical active ingredient B is iminoctadine albesilate.

8. The agricultural chemical composition according to any of claims 1 to 7, wherein the wax is microcrystalline wax or paraffin wax.

9. A production process of the agricultural chemical composition according to any of claims 1 to 8, comprising: mixing a heat-melted mixture of an agricultural chemical active ingredient and a sorbitan fatty acid, with a heat-melted wax.

10. An agricultural chemical sheet in which the agricultural chemical composition according to any of claims 1 to 8 is retained in a sheet base material.

11. A fruit bag in which the agricultural chemical composition according to any of claims 1 to 8 is retained in a bag base material.

12. A production process of an agricultural chemical sheet or a fruit bag, comprising: melting the agricultural chemical composition according to any of claims 1 to 8 by heating, and coating or impregnating the melt in a sheet base material or a bag base material.

## INTERNATIONAL SEARCH REPORT

| | International application No. |
|---|---|
| | PCT/JP2009/004066 |

### A. CLASSIFICATION OF SUBJECT MATTER
A01N25/04(2006.01)i, A01G13/02(2006.01)i, A01N25/30(2006.01)i, A01N25/34
(2006.01)i, A01N43/40(2006.01)i, A01N47/40(2006.01)i, A01N47/44(2006.01)i,
A01N51/00(2006.01)i, A01P3/00(2006.01)i, A01P7/04(2006.01)i

According to International Patent Classification (IPC) or to both national classification and IPC

### B. FIELDS SEARCHED

Minimum documentation searched (classification system followed by classification symbols)
A01N25/04, A01G13/02, A01N25/30, A01N25/34, A01N43/40, A01N47/40,
A01N47/44, A01N51/00, A01P3/00, A01P7/04

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)
JSTPlus/JMEDPlus/JST7580(JDreamII)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-226306 A (Mitsui Chemicals, Inc.),<br>14 August, 2002 (14.08.02),<br>Claims 1, 2, 7; Par. Nos. [0013], [0015];<br>example 1<br>(Family: none) | 1-5,8,9<br>6,7,10-12 |
| X<br>Y<br>A | JP 39-8250 B1 (Esso Research and Engineering<br>Co.),<br>22 May, 1964 (22.05.64),<br>1st example<br>(Family: none) | 1<br>10,12<br>2-9,11 |
| Y<br>A | JP 2007-513108 A (Bayer Cropscience AG.),<br>24 May, 2007 (24.05.07),<br>Claims 1 to 8; Par. No. [0069]<br>& EP 2005827 A1 & WO 2005/053394 A2 | 6-12<br>1-5 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 September, 2009 (04.09.09) | 15 September, 2009 (15.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/004066 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2008-5828 A  (Nippon Nogyo Shizai Kabushiki Kaisha),<br>17 January, 2008 (17.01.08),<br>Claim 1; Par. No. [0025]<br>(Family: none) | 10-12<br>1-9 |
| Y<br>A | JP 49-133 B1  (Kobayashi Bag Mfg. Co., Ltd.),<br>05 January, 1974 (05.01.74),<br>Claim 1<br>(Family: none) | 10-12<br>1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008233424 A
- JP 2008005828 A
- JP 2006067846 A
- JP 2002053411 A
- JP H7291802 B
- JP 2007246496 A

**Non-patent literature cited in the description**

- *Shimane Prefecture Agricultural Testing Center Research Report No. 7,* March 1966, 87-106